# FASCICULE DE BREVET EUROPEEN

(11) **EP 2 700 078 B1**
(45) Date de publication et mention de la délivrance du brevet: **06.05.2015**
(21) Numéro de dépôt: 12724680.9
(22) Date de dépôt: 23.04.2012
(51) Int. Cl.: G21F 9/28, G21F 9/30, G21F 9/02, G21B 1/11, G21F 9/00

(54) **DISPOSITIF ET PROCÉDÉ DE DÉTRITIATION**
VORRICHTUNG UND VERFAHREN ZUM ENTFERNEN VON TRITIUM
APPARATUS AND PROCESS FOR THE REMOVAL OF TRITIUM

(30) Priorité: 21.04.2011 FR 1153468
(43) Date de publication de la demande: 26.02.2014
(73) Titulaire: Commissariat à l'Énergie Atomique et aux Énergies Alternatives, 75015 Paris (FR)
(72) Inventeur: GHIRELLI, Nicolas, F-13013 Marseille (FR); TRABUC, Pierre, F-13770 Venelles (FR); GASTALDI, Olivier, F-13490 Jouques (FR); LEJAY, Pascal, F-38100 Grenoble (FR); BALAY, Joël, F-38100 Grenoble (FR); HADJ-AZZEM, Abdellali, F-38190 Villard-Bonnot (FR)
(74) Mandataire: Dennemeyer & Associates S.A.
(86) Numéro de dépôt international: PCT/FR2012/050882
(87) Numéro de publication internationale: WO 2012/146861

(56) Documents cités:
- EP-A1- 0 204 634
- US-A1- 2002 173 687

## Description

La présente invention concerne un dispositif et un procédé de détritiation. La présente invention concerne en particulier un dispositif et un procédé de détritiation par bullage de déchets radioactifs métalliques fusibles.

La détritiation est un traitement thermique et/ou chimique qui a pour objectif d'extraire le tritium piégé dans la matrice de déchets radioactifs, en particulier de déchets radioactifs métalliques fusibles. Les déchets radioactifs potentiellement destinés à subir une détritiation sont ceux provenant d'installations nucléaires mettant en oeuvre du tritium.

La détritiation des déchets radioactifs métalliques fusibles réduit fortement leur radioactivité, permettant ainsi de simplifier leur stockage ultérieur, en particulier en raison de la diminution significative des exigences en termes de protection de l'environnement et des personnes.

Les procédés de détritiation de l'art antérieur produisent toutefois de grandes quantités d'eau fortement tritiée (HTO) dont la gestion est complexe.

Un but de la présente invention est donc de proposer un procédé et un dispositif de détritiation avancé permettant de réduire fortement, voire d'éviter totalement, la production d'eau tritiée à l'issue de ce procédé.

Ce but est atteint en particulier par un dispositif de détritiation comprenant :
i) un four pour la fusion de déchets tritiés comprenant :
   - un creuset pour recevoir les déchets tritiés et ;
   - un dispositif de bullage pour introduire un gaz de bullage hydrogéné dans le creuset au cours de la fusion et du traitement de déchets tritiés dans le four ; et
ii) un réacteur catalytique à membrane quadripôle pour le traitement des gaz issus de la fusion et du traitement des déchets tritiés dans le four, comprenant une membrane pour séparer deux flux de gaz, la membrane étant perméable aux isotopes de l'hydrogène.

Ce but est atteint également par un procédé de détritiation comprenant les étapes de :
- chargement d'un four à creuset avec un lot de déchets tritiés ;
- chauffe du four pour fondre les déchets tritiés dans le creuset ;
- bullage des déchets tritiés en fusion par introduction d'un gaz de bullage hydrogéné dans le creuset ;
- circulation d'un gaz vecteur entre le four et un réacteur catalytique à membrane (préférentiellement quadripôle) pour l'entrainement des gaz tritiés produits lors de la fusion et du traitement des déchets tritiés, et le traitement des gaz tritiés qui comprend un échange isotopique à travers la membrane du réacteur catalytique à membrane.

A l'issue de cet échange isotopique, des isotopes de l'hydrogène sont obtenus, en réduisant fortement, voire en évitant totalement, la production d'eau tritiée à l'issue du procédé de détritiation de l'invention.

La combinaison du four à creuset et du réacteur à membrane permet la réalisation d'un procédé de détritiation efficace ne produisant pratiquement aucune eau tritiée à l'issue du procédé. En effet, la fusion et le bullage des déchets dans le creuset permettent une évacuation efficace et pratiquement complète du tritium sous forme gazeuse, et les gaz ainsi chargés sont immédiatement traités dans un réacteur à membrane qui permet la récupération du tritium sous la forme également d'un mélange gazeux, qui est ensuite plus simple à traiter et/ou à stocker que de l'eau tritiée.

La présente invention sera mieux comprise à la lecture de la description qui suit, illustrée par les figures, où :
- la figure 1 est un schéma de principe illustrant le procédé de détritiation selon une forme d'exécution préférentielle de l'invention,
- la figure 2 est un détail d'un creuset froid selon une forme d'exécution de l'invention,
- la figure 3 illustre le creuset froid de la figure 2 avec une partie du dispositif de refroidissement du creuset,
- la figure 4 est un schéma de principe du réacteur catalytique à membrane selon l'invention.

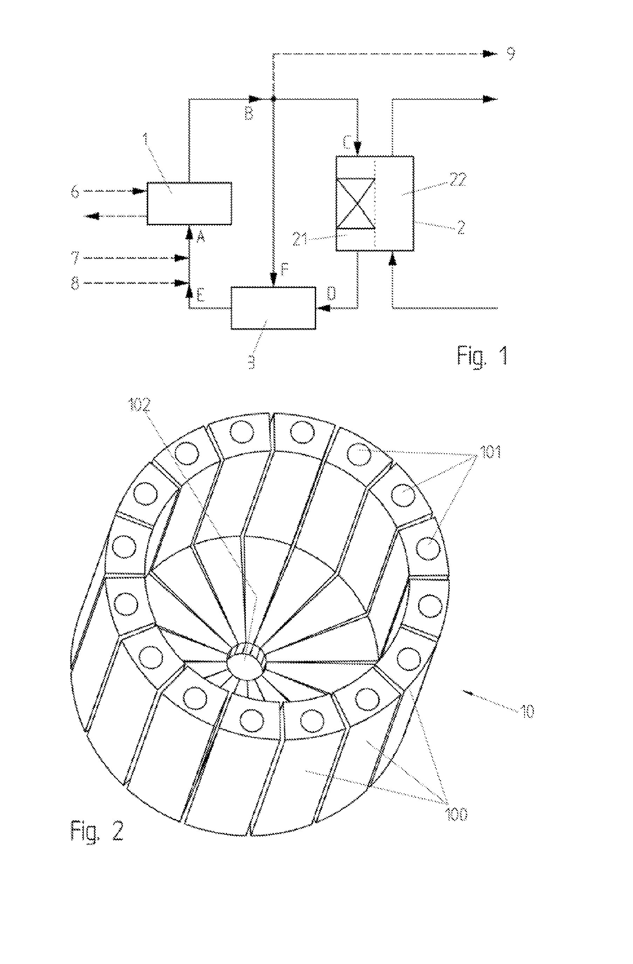

En référence à la figure 1, le dispositif de détritiation selon une version préférentielle de l'invention comprend un four 1 pour faire fondre les déchets radioactifs, et un réacteur à membrane 2 pour traiter les gaz tritiés issus de la fusion et du traitement des déchets. Le four 1 est par exemple un four à induction à creuset froid décrit plus en détails ci-après, le creuset froid se trouvant dans le four 1 et étant destiné à recevoir les déchets tritiés à traiter, par exemple des déchets radioactifs métalliques fusibles. La température à atteindre au sein du four est au minimum la température de fusion des déchets à détritier, qui est généralement comprise entre 1000°C et 1600°C.

Une forme d'exécution du creuset 10 est illustrée à titre d'exemple non limitatif à la figure 2, dans laquelle le creuset 10 est en un matériau magnétique et segmenté pour minimiser les courants induits dans le creuset 10 lors de la chauffe du four 1.

Par exemple, selon cette forme d'exécution, le creuset 10 est un creuset cylindrique segmenté en cuivre. Les segments 100 sont légèrement espacés les uns des autres sur l'essentiel de leur périphérie, et liés entre eux par exemple uniquement autour du centre du fond du creuset 10. La division du creuset 10 en segments 100 distincts et espacés les uns des autres permet de minimiser, voire d'éviter totalement, la formation de courants induits dans la matière du creuset lors de l'activation du four à induction, évitant ainsi une chauffe indésirable du creuset 10.

D'autres matières et/ou formes sont toutefois envisageables dans le cadre de l'invention pour le creuset du four à induction. Selon une forme d'exécution alternative, le creuset est par exemple formé en une seule pièce non segmentée d'un matériau non magnétique.

Le creuset 10 comprend de préférence une buse 102, par exemple dans son fond, pour l'introduction d'un gaz de bullage hydrogéné dans le creuset 10 et par conséquent dans la masse des déchets en fusion au cours de leur traitement. La buse 102 est reliée par l'intermédiaire d'une conduite non représentée à une source non représentée du gaz de bullage hydrogéné, par exemple à un réservoir de gaz, disposée de préférence à l'extérieur du four.

Le gaz de bullage hydrogéné est composé d'un gaz inerte chimiquement (par exemple argon, hélium, ...) auquel de l'hydrogène (H₂) est ajouté. Il présente par exemple la composition volumique suivante : Ar + 1 à 10 % de H₂, de préférence Ar + 2 à 4% de H₂.

Selon une forme d'exécution alternative, le creuset comprend plusieurs buses d'introduction du gaz de bullage hydrogéné pour une répartition uniforme du gaz de bullage hydrogéné dans la masse des déchets en fusion. Selon une variante de l'invention, le gaz de bullage hydrogéné est introduit dans la masse des déchets en fusion par un ou plusieurs tubes introduits dans le creuset 10 par son ouverture supérieure et immergés dans la masse de déchets en fusion.

Le creuset 10 est par exemple un creuset froid, c'est-à-dire que le dispositif de détritiation comprend en outre un dispositif de refroidissement pour refroidir le creuset 10. Le creuset 10 est par conséquent activement maintenu, à l'aide d'un dispositif de refroidissement, à une température sensiblement inférieure à la température des déchets en fusion qu'il contient. Cela permet notamment de préserver au mieux l'intégrité structurelle du creuset froid lors de la chauffe du four au cours de laquelle une température comprise entre 1000°C et 1600°C peut être atteinte.

Le creuset froid permet également une réduction de la contamination du creuset par les déchets tritiés, un démoulage après fusion des déchets traités qui est plus facile, ainsi qu'une meilleure maîtrise des flux de tritium en diminuant sa perte éventuelle autrement que par les exutoires prévus.

Le dispositif de refroidissement pour le refroidissement du creuset 10 comprend par exemple des canaux 101 formés dans les parois du creuset 10 et permettant la circulation d'un fluide caloporteur, par exemple un gaz ou un liquide de refroidissement, à l'intérieur des parois du creuset 10. Comme illustré à la figure 2, chaque segment 100 est de préférence refroidi individuellement et comprend ainsi, par exemple, un canal 101 pour la circulation du fluide caloporteur.

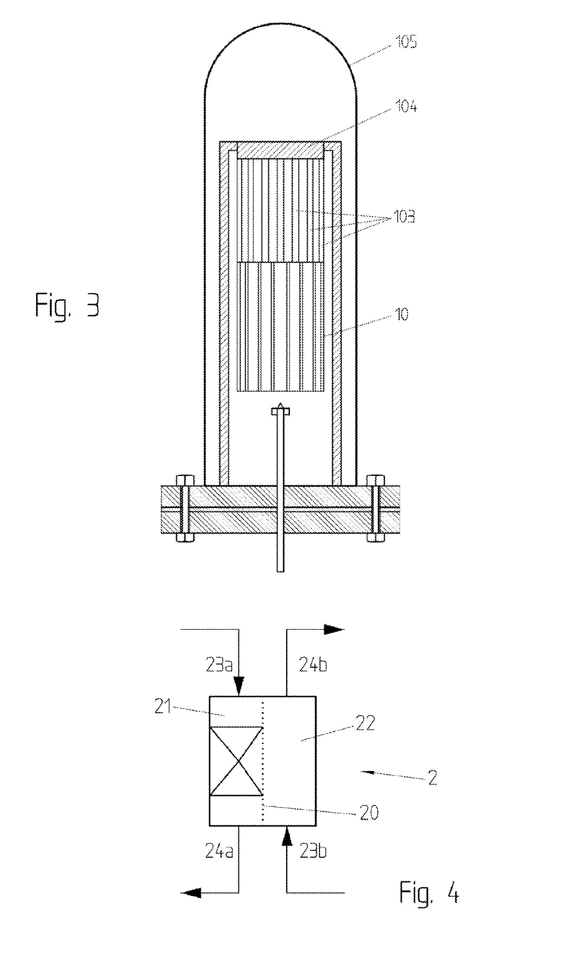

En référence à la figure 3, les canaux de refroidissement à l'intérieur des parois du creuset 10 sont en communication avec des conduites 103 permettant l'introduction du fluide caloporteur dans les canaux. Les conduites 103 sont elles-mêmes alimentées en fluide caloporteur par un distributeur 104 qui distribue le fluide caloporteur froid entre les conduites 103 et évacue le fluide caloporteur chaud par exemple vers un échangeur de chaleur non représenté, disposé de préférence à l'extérieur du four, pour le refroidir. D'autres configurations du dispositif de refroidissement pour le refroidissement du creuset 10 sont toutefois envisageables dans le cadre de l'invention.

Le creuset 10 est de préférence coiffé d'un dispositif thermiquement isolant non représenté et, par exemple confiné dans un doigt de gant en quartz 105 permettant l'introduction d'un gaz vecteur.

Selon une forme d'exécution préférentielle de l'invention illustrée schématiquement à la figure 4, le réacteur catalytique à membrane 2 du dispositif de détritiation est un composant quadripôle, c'est-à-dire comprenant deux entrées 23a, 23b et deux sorties 24a, 24b, permettant ainsi la circulation de deux flux de matière en son sein. Le réacteur à membrane 2 comprend deux chambres 21, 22 permettant chacune la circulation d'un flux de matière à travers le réacteur 2. Les deux chambres 21, 22 sont séparées par une membrane 20 qui est de préférence perméable aux isotopes de l'hydrogène. La membrane 20 est faite de préférence d'un alliage de palladium et d'argent (Pd/Ag) qui permet notamment de catalyser l'échange isotopique.

Une première chambre 21 du réacteur à membrane est intégrée à un circuit A, B, C, D, E représenté de façon schématique à la figure 1, qui traverse également le four 1 et qui comprend de préférence une pompe 3 pour mettre en circulation le mélange gazeux dans le circuit A, B, C, D, E. La deuxième chambre 22 est reliée via la sortie 24b à un système de récupération et/ou stockage du tritium.

Le procédé de détritiation de l'invention est par exemple un procédé de type batch comprenant une suite de séquences qui est répétée pour chaque batch ou lot de déchets tritiés traité.

Au cours d'une séquence de démarrage, les déchets tritiés sont chargés dans le four 1 du dispositif de détritiation, ce qui est illustré par la flèche 6 sur la figure 1, et disposés dans le creuset froid non représenté à la figure 1.

Un gaz vecteur est introduit dans le circuit A, B, C, D, E, comme illustré par les flèches 7 et 8. Il est éventuellement hydrogéné et comprend un gaz inerte chimiquement (par exemple argon, hélium,...) et de préférence moins de 4% (typiquement entre 0,1 % et 4 %) en volume d'hydrogène H₂. Le gaz vecteur est par exemple amené à partir de bouteilles non représentées munies de détendeurs et de vannes. Le débit du gaz vecteur peut varier en fonction des quantités et de l'activité de déchets tritiés, et des possibilités du système de piégeage des gaz tritiés en aval.

La séquence de démarrage est suivie par une séquence de fusion et détritiation au cours de laquelle le four 1 est chauffé afin de faire fondre le lot de déchets tritiés. Selon une forme d'exécution, le four 1 est un four à induction et les déchets sont des déchets tritiés métalliques qui chauffent et fondent sous l'effet du champ magnétique généré dans le four 1.

Le creuset dans lequel se trouve la masse des déchets fondus, ou fondant, est alors par exemple maintenu à une température sensiblement inférieure à celle du fondant à l'aide du dispositif de refroidissement. L'utilisation d'un creuset froid facilite le démoulage du lingot obtenu après fusion.

Une fois les déchets fondus, un gaz de bullage hydrogéné est introduit dans le fondant, par exemple par la buse 102 se trouvant dans le fond du creuset 10. Le gaz de bullage hydrogéné traverse ainsi le fondant et un échange isotopique a lieu entre le gaz et les déchets fondus, de sorte que la phase gazeuse s'enrichit en tritium.

Un bullage en partie inférieure offre plusieurs avantages, tel que l'optimisation du design possible pour une meilleure distribution de gaz et donc un facteur de détritiation amélioré, ainsi qu'un confinement possible au plus près du gaz produit par détritiation.

Le gaz vecteur se trouvant dans le circuit A, B, C, D, E est amené en circulation dans le dispositif de détritiation entre le four 1 et le réacteur catalytique à membrane 2, par exemple à l'aide de la pompe 3, entrainant ainsi les gaz tritiés du four 1 vers le réacteur à membrane 2.

Le flux de gaz tritiés provenant du four 1 entre dans la première chambre 21 par l'entrée 23a du réacteur à membrane 2, tandis qu'un flux d'hydrogène H₂ est introduit en contresens par l'entrée 23b de la deuxième chambre 22.

Les gaz tritiés se composent généralement d'un mélange de gaz de formule générale Q₂ ou Q₂O comprenant le tritium et au moins un des isotopes de l'hydrogène noté « Q » (soit Q choisi parmi H = Hydrogène, D = Deutérium, T = Tritium), tel que par exemple un gaz choisi parmi T₂, HT, DT, T₂O, HTO ou DTO.

Les gaz tritiés sont mélangés au gaz vecteur lorsqu'ils arrivent à la membrane 2.

La membrane qui sépare les flux étant perméable à Q₂ mais pas Q₂O, l'échange isotopique suivant entre les deux flux se fait par exemple selon la formule générale suivante :

*H*₂ + *Q*₂*O* ↔ *H*₂*O* + *Q*₂ ;

soit par exemple : *H*₂ + *T*₂*O* ↔ *H*₂*O* + *T*₂,
ou *H*₂ + *HTO* ↔ *H*₂*O* + *HT*.

Ainsi, le gaz sortant de la première chambre 21 par la sortie 24a et retournant vers le four 1 via la pompe 3 est essentiellement détritié et comprend principalement le gaz vecteur et de la vapeur d'eau. Les isotopes de l'hydrogène sont récupérés à la sortie 24b de la deuxième chambre 22 du réacteur à membrane 2, sous la forme d'un mélange gazeux (espèces réduites telles que par exemple H₂, HT et/ou T₂) qui est par exemple stocké directement sous forme d'hydrures ou envoyé vers un système de purification.

Au cours de la séquence de fusion et détritiation, la pression à l'intérieur du dispositif de détritiation de l'invention est de préférence contrôlée de manière continue ou à intervalles réguliers à l'aide d'un manomètre non représenté. La pression est de préférence maintenue à une valeur constante et corrigée au besoin par ajout de gaz vecteur hydrogéné. La concentration d'hydrogène dans le gaz de bullage hydrogéné est également mesurée et régulée par ajout d'hydrogène pour optimiser l'échange isotopique avec le fondant et ainsi garantir une détritiation efficace des déchets.

Une fois le lot de déchets traités, la puissance apportée au dispositif de détritiation, en particulier au four 1, est progressivement diminuée au cours d'une séquence d'arrêt. Le circuit A, B, C, D, E est purgé via un exutoire 9 illustré schématiquement à la figure 1. Les déchets métalliques détritiés sont alors déchargés du four 1 pour leur stockage, élimination ou recyclage.

### Exemple d'application du procédé de détritiation selon une forme d'exécution de l'invention :

### 1. Démarrage

Les opérations suivantes sont identifiées pendant la phase de démarrage :
- Chargement des déchets tritiés dans le four, par exemple environ 100 g, fermeture du four, vérification de l'étanchéité du dispositif ;
- Balayage par un gaz vecteur contenant par exemple moins de 4% volumique d'hydrogène, ou plus si la sécurité du procédé est démontrée dans le système. Le débit peut varier en fonction des quantités et de l'activité de déchets tritiés, et des possibilités du système de piégeage des gaz tritiés en aval ;
- Apport de puissance au niveau du système de chauffe jusqu'à fusion du métal, la puissance dépendant de la quantité de déchets, du type de métal, du débit de balayage et de l'efficacité du four.

### 2. Fusion et détritiation

Les opérations suivantes sont identifiées lors de l'opération de détritiation :
- Maintien du balayage de gaz en assurant un bullage dans le métal fondu ;
- Contrôle de la pression et maintien de la concentration en hydrogène constante dans le gaz de bullage hydrogéné, par exemple moins de 4%volumique, ou plus si la sécurité du procédé est démontrée ;
- Collecte des gaz de bullage et envoi de ces gaz dans le réacteur à membrane, circulation dans le(s) tube(s) de ce réacteur ;
- Balayage en hydrogène côté calandre du réacteur à membrane afin de promouvoir l'échange isotopique ;
- Récupération des isotopes de l'hydrogène qui ont diffusé à travers la membrane ;
- Durée de traitement variable selon l'activité du tritium, la nature du matériau et la masse de l'échantillon.

### 3. Arrêt

Les opérations suivantes sont identifiées lors de la phase d'arrét :
- Diminution progressive de la puissance apportée au système, en particulier au système de chauffe ;
- Purge via l'exutoire en fin de traitement ;
- Déchargement du déchet détritié une fois la température autorisant la manipulation du déchet solidifié atteinte.

Il ressort de la description qui précède que le dispositif et le procédé de détritiation de l'invention présentent notamment au moins un des avantages suivants :
- production réduite voire nulle d'eau tritiée,
- valorisation immédiate du tritium contenu dans les déchets,
- amélioration de l'efficacité de la détritiation : selon la nature des matériaux et l'activité initiale, le ratio entre la teneur en tritium initiale et finale peut être compris entre 1000 et plus de 10000.

## Revendications

1. Dispositif de détritiation comprenant :
i) un four (1) pour la fusion de déchets tritiés comprenant :
- un creuset (10) pour recevoir les déchets tritiés ;
- un dispositif de bullage pour introduire un gaz de bullage hydrogéné dans ledit creuset (10) au cours de la fusion et du traitement des déchets tritiés dans ledit four (1) ; et
ii) un réacteur catalytique à membrane (2) quadripôle pour le traitement des gaz issus de la fusion et du traitement des déchets tritiés dans ledit four (1), comprenant une membrane (20) pour séparer deux flux de gaz, ladite membrane (20) étant perméable aux isotopes de l'hydrogène.

2. Dispositif de détritiation selon la revendication précédente, ladite membrane (2) étant faite en un alliage de palladium et d'argent.

3. Dispositif de détritiation selon l'une des revendications précédentes, ledit four (1) étant un four à induction.

4. Dispositif de détritiation selon la revendication précédente, ledit creuset (10) étant en un matériau magnétique et segmenté pour minimiser les courants induits dans ledit creuset (10) lors de la chauffe du four (1).

5. Dispositif de détritiation selon l'une des revendications précédentes, comprenant en outre un dispositif de refroidissement pour refroidir ledit creuset (10).

6. Dispositif de détritiation selon l'une des revendications précédentes, ledit dispositif de bullage comprenant une buse (102) dans le fond dudit creuset (10) pour l'introduction du gaz de bullage hydrogéné dans ledit creuset (10).

7. Dispositif de détritiation selon l'une des revendications précédentes comprenant en outre une pompe (3) pour la circulation d'un gaz vecteur dans ledit dispositif de détritiation entre ledit four (1) et ledit réacteur catalytique à membrane (2).

8. Procédé de détritiation comprenant les étapes de :
- chargement d'un four (1) à creuset (10) avec un lot de déchets tritiés ;
- chauffe du four (1) pour fondre les déchets tritiés dans ledit creuset (10) ;
- bullage des déchets tritiés en fusion par introduction d'un gaz de bullage hydrogéné dans ledit creuset (10) ;
- circulation d'un gaz vecteur entre ledit four (1) et un réacteur catalytique à membrane (2) pour l'entrainement des gaz tritiés produits lors de la fusion et du traitement des déchets tritiés, et le traitement des gaz tritiés qui comprend un échange isotopique à travers la membrane (20) dudit réacteur catalytique à membrane (2).

9. Procédé selon la revendication précédente, comprenant en outre l'introduction d'un flux d'hydrogène H₂ à contresens du flux des gaz tritiés dans ledit réacteur catalytique à membrane (2) et la récupération de tritium en phase gazeuse.

10. Procédé selon l'une des revendications 8 à 9, comprenant en outre l'évacuation du lot de déchets traités hors du four (1).

11. Procédé selon l'une des revendications 8 à 10, comprenant un réacteur catalytique à membrane (2) quadripôle.

## Patentansprüche

1. Vorrichtung zum Entfernen von Tritium, umfassend:
i) einen Ofen (1) für das Schmelzen von tritiumhaltigen Abfällen, umfassend:
- einen Tiegel (10) zum Aufnehmen der tritiumhaltigen Abfälle,
- eine Vorrichtung zur Blasenbildung für das Einleiten eines wasserstoffhaltigen Gases zur Blasenbildung in den Tiegel (10) während der Schmelze und der Verarbeitung der tritiumhaltigen Abfällen in dem Ofen (1) und
ii) einen katalytischen Reaktor mit vierpoliger Membran (2) zur Verarbeitung der bei der Schmelze entstandenen Gase und der Verarbeitung der tritiumhaltigen Abfällen in dem Ofen (1),
umfassend eine Membran (20) zum Trennen zweier Gasströme, wobei die Membran (20) für Wasserstoffisotope durchlässig ist.

2. Vorrichtung zum Entfernen von Tritium nach vorangehendem Anspruch, wobei die Membran (2) aus einer Legierung aus Palladium und Silber gefertigt ist.

3. Vorrichtung zum Entfernen von Tritium nach einem der vorangehenden Ansprüche, wobei der Ofen (1) ein Induktionsofen ist.

4. Vorrichtung zum Entfernen von Tritium nach vorangehendem Anspruch, wobei der Tiegel (10) aus einem magnetischen Material und segmentiert ist, um die in dem Tiegel (10) beim Heizen des Ofens (1) induzierten Ströme zu minimieren.

5. Vorrichtung zum Entfernen von Tritium nach einem der vorangehenden Ansprüche, die ferner eine Kühlvorrichtung zum Kühlen des Tiegels (10) umfasst.

6. Vorrichtung zum Entfernen von Tritium nach einem der vorangehenden Ansprüche, wobei die Vorrichtung zur Blasenbildung eine Düse (102) im Boden des Tiegels (10) zum Einleiten des wasserstoffhaltigen Gases zur Blasenbildung in den Tiegel (10) umfasst.

7. Vorrichtung zum Entfernen von Tritium nach einem der vorangehenden Ansprüche, die ferner eine Pumpe (3) für die Zirkulation eines Vektorgases in der Vorrichtung zum Entfernen von Tritium zwischen dem Ofen (1) und dem katalytischen Reaktor mit Membran (2) umfasst.

8. Verfahren zum Entfernen von Tritium, das die Schritte umfasst:
- Beschicken eines Ofens (1) mit Tiegel (10) mit einer Charge tritiumhaltiger Abfälle,
- Heizen des Ofens (1) zum Schmelzen der tritiumhaltigen Abfälle in dem Tiegel (10),
- Blasenbilden der in Schmelze befindlichen tritiumhaltigen Abfälle durch Einleiten eines wasserstoffhaltigen Gases zur Blasenbildung in den Tiegel (10),
- Zirkulieren eines Vektorgases zwischen dem Ofen (1) und einem katalytischen Reaktor mit Membran (2) für das Antreiben der tritiumhaltigen Gase, die bei der Schmelze und der Verarbeitung der tritiumhaltigen Abfälle entstehen, und das Verarbeiten der tritiumhaltigen Gase, das einen Isotopenaustausch durch die Membran (20) des katalytischen Reaktors mit Membran (2) umfasst.

9. Verfahren nach vorangehendem Anspruch, das ferner das Einleiten eines Wasserstroms H₂ in Gegenrichtung zum Strom der tritiumhaltigen Gase in den katalytischen Reaktor mit Membran (2) und das Rückgewinnen von Tritium in Gasphase umfasst.

10. Verfahren nach einem der Ansprüche 8 bis 9, das ferner das Entfernen der Charge behandelter Abfälle aus dem Ofen (1) umfasst.

11. Verfahren nach einem der Ansprüche 8 bis 10, das einen katalytischen Reaktor mit vierpoliger Membran (2) umfasst.

## Claims

1. Detritiation device comprising:
i) a furnace (1) for melting tritiated wastes comprising:
- a crucible (10) for receiving the tritiated wastes;
- a bubbling device for introducing a hydrogenated bubbling gas into said crucible (10) during the melting and treatment of the tritiated wastes in said furnace (1); and
ii) a catalytic four-pole membrane reactor (2) for the treatment of the gases originating from the melting and treatment of the tritiated wastes in said furnace (1), comprising a membrane (20) to separate two gas flows, said membrane (20) being permeable to isotopes of hydrogen.

2. Detritiation device according to the previous claim, said membrane (2) being made from a palladium and silver alloy.

3. Detritiation device according to one of the previous claims, said furnace (1) being an induction furnace.

4. Detritiation device according to the previous claim, said crucible (10) being made from a magnetic material and segmented to minimize the currents induced in said crucible (10) at the time of heating the furnace (1).

5. Detritiation device according to one of the previous claims, further comprising a cooling device to cool said crucible (10).

6. Detritiation device according to one of the previous claims, said bubbling device comprising a nozzle (102) in the bottom of said crucible (10) for introducing the hydrogenated bubbling gas into said crucible (10).

7. Detritiation device according to one of the previous claims, further comprising a pump (3) for circulation of a vector gas in said detritiation device between said furnace (1) and said catalytic membrane reactor (2).

8. Detritiation process comprising the steps of:
- loading a crucible (10) furnace (1) with a batch of tritiated wastes;
- heating the furnace (1) to melt the tritiated wastes in said crucible (10);
- bubbling the melting tritiated wastes by introducing a hydrogenated bubbling gas into said crucible (10);
- circulating a vector gas between said furnace (1) and a catalytic membrane reactor (2) for entrainment of the tritiated gases produced during the melting and treatment of the tritiated wastes, and the treatment of the tritiated gases that comprises an isotopic exchange through the membrane (20) of said catalytic membrane reactor (2).

9. Process according to the previous claim, further comprising introducing a hydrogen H₂ flow in the direction opposite to the tritiated gases flow in said catalytic membrane reactor (2) and recovering tritium in the gas phase.

10. Process according to one of the claims 8 to 9, further comprising discharging of the batch of wastes treated outside the furnace (1).

11. Process according to one of the claims 8 to 10, comprising a catalytic four-pole membrane reactor (2)
